(19) **Europäisches Patentamt European Patent Office Office européen des brevets**

(11) **EP 4 282 091 B1**

(12) **EUROPEAN PATENT SPECIFICATION**

(45) Date of publication and mention of the grant of the patent:
**31.12.2025 Bulletin 2026/01**

(21) Application number: **21721237.2**

(22) Date of filing: **03.03.2021**

(51) International Patent Classification (IPC):
*H04B 10/2543* (2013.01)    *H04B 10/54* (2013.01)
*H04B 10/556* (2013.01)

(52) Cooperative Patent Classification (CPC):
**H04B 10/2543; H04B 10/541; H04B 10/556**

(86) International application number:
**PCT/RU2021/000091**

(87) International publication number:
**WO 2022/186714 (09.09.2022 Gazette 2022/36)**

(54) **NON-LINEAR ENCODER FOR FIBER-OPTIC COMMUNICATION**

**NICHTLINEARER KODIERER FÜR FASEROPTISCHE ÜBERTRAGUNG**

**CODEUR NON LINÉAIRE POUR COMMUNICATION PAR FIBRE OPTIQUE**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.11.2023 Bulletin 2023/48**

(73) Proprietor: **Huawei Technologies Co., Ltd. Shenzhen, Guangdong 518129 (CN)**

(72) Inventors:
• **KRACHKOVSKY, Victor Yurevich**
**Shenzhen Guangdong, 518129 (CN)**

• **KURMAEV, Oleg Feat'evich**
**Shenzhen Guangdong, 518129 (CN)**
• **MAEVSKII, Aleksei Eduardovich**
**Shenzhen Guangdong, 518129 (CN)**
• **SIDELNIKOV, Gleb Borisovich**
**Shenzhen Guangdong, 518129 (CN)**

(74) Representative: **Epping - Hermann - Fischer Patentanwaltsgesellschaft mbH Schloßschmidstraße 5 80639 München (DE)**

(56) References cited:
**JP-A- H11 215 091    US-B1- 10 587 358**

**Description**

**TECHNICAL FIELD**

The present disclosure relates to data communication, and more particularly to an encoder for fiber-optic communication. Moreover, the present disclosure also relates to a fiber-optic transmission apparatus having such encoder, for modulating an optical carrier signal.

**BACKGROUND**

Fiber-optic communication is a method that transmits an information from one place to another place, through an optical fiber, by sending an optical signal which is modulated to carry the information. Transmission of the optical signal over the optical fiber is usually impaired by a significant amount of noise, such as additive white gaussian noise (AWGN) and nonlinear noise. Such noise can distort the optical signal en route that tends to affect bit-error-rate (BER), symbol error rate (SER), or a maximum achievable transmission distance.

Optical fiber nonlinear effects such as self-phase modulation (SPM), cross-phase modulation (XPM), four-wave mixing (FWM) and scattering effects, may happen due to use of increased input power, higher bit rates, longer transmission distances, increased numbers of channels, and variation in refractive index of the optical fiber (also called Kerr effect). Further, in coherent fiber optics, there is a nonlinear Shannon limit which is caused by Kerr nonlinearity accumulated during propagation of the optical signal. The nonlinear Shannon limit has been identified as a fundamental barrier to a maximum rate of transmitted information in optical communications.

Several probabilistic shaping approaches are proposed for improving modulation of the optical signal. The probabilistic shaping approach is employed to limit occurrence of high-power symbols in order to reduce optical fiber nonlinear effects and to increase signal-to-noise ratio (SNR) for all other symbols. Existing methods are developed to realize probabilistic shaping such as enumeration scheme, trellis-coded modulation (TCM), and block shaping.

The probabilistic shaping approach may be used for capacity penalty reduction of traditional quadrature amplitude modulation (QAM) signals in an AWGN channel. TCM approach may be used for channels with memory to achieve better performance. Enumeration scheme may be optimal for data block with a finite length, but it is difficult to unite the data block with a forward error correction (FEC) module. Since it may cause an error propagation effect that should be taken into account when uniting the data block with the FEC module.

Some existing approaches may focus on increasing the input power. Increasing the input power may increase SNR but it leads to a nonlinear regime immediately which may produce additional penalty. Some existing approaches may consider different nonlinear metrics minimization, but they mostly considered it from hard restriction point of view. Some of the existing approaches propose perturbation-based model for nonlinearity compensation. Further, with respect to shaping with memory, memory-less super gaussian shaping may provide performance in links with compact disc (CD) management. Temporal probabilistic shaping may support short memory effects.

Even though there have been several probabilistic shaping methods available, proper metrics for nonlinear constellation shaping are still unknown. There is no common methodology to cover nonlinear metric minimization of arbitrary form within a block of big memory.

Therefore, there arises a need to address the aforementioned technical drawbacks in existing systems or technologies in reducing the optical fiber nonlinear effects.

Document US 10 587 358 B1 describes an optical transmitter, which is operative to generate, from a plurality of encoded client bits, a set of symbols exhibiting non-uniform visitation probabilities in at least one dimension, to encode the set of symbols across a plurality of frequency division multiplexing (FDM) subcarriers, and to transmit an optical signal comprising the plurality of FDM subcarriers across which the set of symbols is encoded. An optical receiver is operative to decode a set of symbol estimates from a plurality of FDM subcarriers, the symbol estimates comprising estimates of symbols exhibiting non-uniform visitation probabilities in at least one dimension, and to recover client bits from the set of symbol estimates.

Document JP H11 215091 A describes a sending side that applies scramble systems #1 to #N to a sending data system. Outputs of scrambling parts 10#1 to 10#N are modulated, and plural OFDM symbols are produced. A selecting part 16 selects one of plural OFDM symbols and sends it. A receiving side descrambles digital data obtained from a received signal by descrambling parts 112#1 to 112#N. One among plural descrambled outputs is a correct data system. A selecting part outputs the data system that is correctly descrambled as a receiving data system.

**SUMMARY**

It is an object of the present disclosure to provide an improved approach for reducing nonlinearity accumulation during propagation of an optical carrier signal through an optical fiber.

This object is achieved by the features of the independent claims. Further implementation forms are apparent from the dependent claims, the description, and the figures.

The present disclosure provides an encoder for fiber-optic communication and also a fiber-optic transmission apparatus having such encoder.

According to a first aspect, there is provided an encoder for fiber-optic communication. The encoder includes an input, a digital signal processor and an output. The input is configured to receive an information bit sequence. The digital signal processor (DSP) is configured to translate the information bit sequence into a modulation symbol sequence for modulating an optical carrier signal. The output is configured to output the modulation symbol sequence. The DSP is configured to translate the information bit sequence into the modulation symbol sequence such that the modulation symbol sequence has, among all symbol sequences in a candidate set of symbol sequences, a smallest value of a metric. The symbol sequences in the candidate set are different representations of the information bit sequence in a symbol space. The metric is defined as

$$S = \sum_{m \in M} \left[ w_{XX,m} \cdot S_{XX,m} + w_{YY,m} \cdot S_{YY,m} + w_{XY,m} \cdot S_{XY,m} \right]$$

for any symbol sequence $Z$ = ($Z[0]$, ..., $Z[N - 1]$) in the candidate set,
where,

$N$ is a common length of the symbol sequences in the candidate set,

$Z[k]$ is a symbol at a position $k$ in the symbol sequence ($Z[0]$, ... , $Z[N - 1]$), $k \in \{0, ..., N - 1\}$,

the symbol $Z[k]$ includes one or both of the following: a complex-valued first symbol $X[k]$ related to a first polarization and a complex-valued second symbol $Y[k]$ related to a second polarization,

$S$ is a value of the metric,

$m$ is a summation index,

$M$ is a set of one or more whole numbers in the range of $-N + 2$ to $N - 2$,

$\sum_{m \in M}$ means summation over all values of $m$ in M, where m=0 to N-1,

$w_{XX,m}$, $w_{XY,m}$, $w_{YY,m}$ are real-valued weights that depend on the value of $m$,

$S_{XX,m}$, $S_{XY,m}$, $S_{XY,m}$ are non-negative numbers defined as

$$S_{XX,m} = \left| \sum_{k \in K} X[k] X^*[k + m] \right|^\alpha,$$

$$S_{YY,m} = \left| \sum_{k \in K} Y[k] Y^*[k + m] \right|^\alpha,$$

$$S_{XY,m} = \left| \sum_{k \in K} X[k] Y^*[k + m] \right|^\alpha,$$

$|\,|$ means an absolute value of a complex number,

$\alpha$ is a positive real number, ( )$^\alpha$ means "to the power of $\alpha$",

$k$ is a summation index,

*K* is a set of one or more whole numbers,

$\Sigma_{k \in K}$ means summation over all values *k* in *K,* and

( )$^*$ means complex conjugation.

The encoder enables the addition of nonlinear properties in the optical carrier signal with low rate loss to decrease nonlinearity accumulation during propagation of the optical carrier signal through an optical fiber. The optical carrier signal modulated with the modulation symbol sequence may reduce optical nonlinear effects such as self-phase modulation (SPM), cross-phase modulation (XPM), and four-wave mixing (FWM) together during the propagation of the optical carrier signal. The encoder optionally employs a shaping procedure to translate the information bit sequence into the modulation symbol sequence with the smallest value of the metric. The shaping procedure is flexible, and may be applied to quadrature amplitude modulation (QAM) constellation, and phase-shift keying (PSK) constellation. The shaping procedure may be applied to any number of bit streams or even part of the bit streams, so it is possible to combine the shaping procedure with convenient enumeration probabilistic shaping. Physics relative performance of the shaping procedure may be increased with growing numbers of shaped subcarriers in dense wavelength division multiplexing (DWDM) signal. The shaping procedure may not affect forward error correction (FEC) work and vice versa.

In one possible implementation form, the set K includes at least one number that is different from zero.

In another possible implementation form, wherein

$$S_{XX,m} = \left| \sum_{k=0}^{N-1-m} X[k]X^*[k+m] \right|^{\alpha} ,$$

$$S_{YY,m} = \left| \sum_{k=0}^{N-1-m} Y[k]Y^*[k+m] \right|^{\alpha} ,$$

$$S_{XY,m} = \left| \sum_{k=0}^{N-1-m} X[k]Y^*[k+m] \right|^{\alpha} ,$$

form $\in \{0, ...,N - 2\}$
and, wherein

$$S_{XX,m} = \left| \sum_{k=-m}^{N-1} X[k]X^*[k+m] \right|^{\alpha} ,$$

$$S_{YY,m} = \left| \sum_{k=-m}^{N-1} Y[k]Y^*[k+m] \right|^{\alpha} ,$$

$$S_{XY,m} = \left| \sum_{k=-m}^{N-1} X[k]Y^*[k+m] \right|^{\alpha} .$$

form $\in \{-N + 2, ..., -1\}$.

In yet another possible implementation form, wherein

$$S_{XX,m} = \left| \sum_{k=0}^{N-1} X[k]X^*[k+m] \right|^{\alpha} ,$$

$$S_{YY,m} = \left| \sum_{k=0}^{N-1} Y[k]Y^*[k+m] \right|^{\alpha} ,$$

$$S_{XY,m} = \left| \sum_{k=0}^{N-1} X[k]Y^*[k+m] \right|^{\alpha} ,$$

for any $m \in M$, with the following cyclic definitions:

$$X[k + p * N] = X[k] ,$$

$$Y[k + p * N] = Y[k] ,$$

$$p \in \{-1, 0, 1\} .$$

The set $M$ may be a superset of at least one of the following sets:

$$\{0,1\}, \quad \{-1,0\}, \quad \{-1,0,1\},$$

$$\{0,1,2\}, \quad \{-2,-1,0\}, \quad \{-2,-1,0,1,2\},$$

$$\{0,1,2,3\}, \quad \{-3,-2,-1,0\}, \quad \{-3,-2,-1,0,1,2,3\},$$

where M=3.

In yet another possible implementation form, wherein $\alpha$ = 1.

In yet another possible implementation form, $Z[k]$ includes only the first symbol $X[k]$ and no further symbol. The metric is defined as

$$S = \sum_m w_{XX,m} \cdot S_{XX,m} .$$

The metric $S$ may be a measure of expected distortion, the expected distortion being distortion of a hypothetical optical carrier signal that is modulated with the symbol sequence Z and transmitted via an optical fiber. The encoder may select a symbol sequence as the modulation symbol sequence that is able to yield a modulated optical carrier signal which may be less affected by distortion when propagating through the optical fiber, when compared to other symbol sequences in the candidate set of symbol sequences.

In yet another possible implementation form, each of $X[k]$ and $Y[k]$ is complex-valued. Each of $X[k]$ and $Y[k]$ is optionally an amplitude and phase shift keying (APSK) symbol. Each of $X[k]$ and $Y[k]$ is optionally a quadrature-amplitude modulation (QAM) symbol. Each of $X[k]$ and $Y[k]$ is optionally real-valued. Each of $X[k]$ and $Y[k]$ is optionally a pulse-amplitude modulation (PAM) symbol.

In yet another possible implementation form, the DSP is configured to obtain the modulation symbol sequence by selecting, among the symbol sequences in the candidate set, a symbol sequence that has the smallest value of the metric. The optical carrier signal modulated with the modulation symbol sequence may be less affected by the distortion during propagation through the optical fiber.

In yet another possible implementation form, the DSP is configured to generate the candidate set of symbol sequences by generating a plurality of shaped bit sequences, each of the shaped bit sequences being a representation of the information bit sequence; and mapping each shaped bit sequence to the symbol space.

In yet another possible implementation form, each of the shaped bit sequences includes an encoded form of the information bit sequence, and an indication of a code word for decoding the encoded form.

In yet another possible implementation form, the encoded form of the information bit sequence includes one or more non-encoded bits of the information bit sequence. The encoded form of the information bit sequence optionally does not comprise any non-encoded bits of the information bit sequence.

In a possible implementation form, the DSP is configured to generate the encoded form of the information bit sequence by applying the code word to the information bit sequence.

In another possible implementation form, applying the code word to the information bit sequence includes, for each bit of the code word, a logical XOR operation on a pair of bits, the bit pair of bits including the bit of the code word and a bit of the information bit sequence. The output is optionally connected or connectable to an optical transmitter.

According to a second aspect, there is provided a fiber-optic transmission apparatus. The fiber-optic transmission apparatus includes the encoder as described above and an optical transmitter. The optical transmitter includes an input connected to the output of the encoder and an output connected or connectable to an optical fiber.

The fiber-optic transmission apparatus may add nonlinear properties in the optical carrier signal with low rate loss to decrease nonlinearity accumulation during propagation of the optical carrier signal through an optical fiber. The optical carrier signal modulated with the modulation symbol sequence may reduce optical nonlinear effects such as self-phase modulation (SPM), cross-phase modulation (XPM), and four-wave mixing (FWM) together during propagation of the optical carrier signal. The encoder optionally employs a shaping procedure to translate the information bit sequence into the modulation symbol sequence with the smallest value of the metric. The shaping procedure is flexible, and may be applied to quadrature amplitude modulation (QAM) constellation, and phase-shift keying (PSK) constellation. The shaping procedure may be applied to any number of bit streams or even part of the bit streams, so it is possible to combine the shaping procedure with convenient enumeration probabilistic shaping. Physics relative performance of the shaping procedure may be increased with growing numbers of shaped subcarriers in dense wavelength division multiplexing (DWDM) signal. The shaping procedure may not affect forward error correction (FEC) work and vice versa.

In a possible implementation form, the optical transmitter is configured to modulate an optical carrier signal based on the modulation symbol sequence, and output the modulated optical carrier signal at the output of the optical transmitter.

A technical problem in the prior art is resolved, where the technical problem concerns reducing the optical fiber nonlinear effects.

Therefore, in contradistinction to the prior art, according to the encoder for fiber-optic communication in the present disclosure, the shaping procedure is employed to translate the information bit sequence into the modulation symbol sequence for modulating the optical carrier signal. The modulation symbol sequence has the smallest value of the metric among all the symbol sequences in the candidate set of symbol sequences. The optical carrier signal modulated with the modulation symbol sequence may reduce optical nonlinear effects such as SPM, XPM, and FWM together during the propagation. Further, the shaping procedure has low overhear.

These and other aspects of the present disclosure will be apparent from and the implementation(s) described below.

## BRIEF DESCRIPTION OF DRAWINGS

Implementations of the present disclosure will now be described, by way of example only, with reference to the accompanying drawings, in which:

FIG. 1 is a block diagram of an encoder for fiber-optic communication in accordance with an implementation of the present disclosure;

FIG. 2 is an exemplary schematic illustration of a process of translating an information bit sequence into a modulation symbol sequence using the encoder of FIG.1 in accordance with an implementation of the present disclosure;

FIG. 3 is an exemplary schematic illustration of a process of translating an information bit sequence into a modulation symbol sequence for a binary phase shift keying (BPSK) modulation in accordance with an implementation of the present disclosure;

FIG. 4 is an exemplary schematic illustration of a quadrature phase shift keying (QPSK) shaping in accordance with an implementation of the present disclosure;

FIG. 5 is an exemplary graphical representation of a normalized mean squared error (NMSE) versus an optical signal-to-noise ratio (OSNR) for a QPSK modulation in accordance with an implementation of the present disclosure;

FIG. 6 is an exemplary graphical representation of a bit-error-rate (BER) versus an OSNR for a QPSK modulation in accordance with an implementation of the present disclosure;

FIG. 7 is an exemplary schematic illustration of a 16 quadrature amplitude modulation (16QAM) shaping in accordance with an implementation of the present disclosure;

FIG. 8 is an exemplary graphical representation of a normalized mean squared error (NMSE) versus an optical signal-to-noise ratio (OSNR) for a 16QAM in accordance with an implementation of the present disclosure;

FIG. 9 is an exemplary graphical representation of a bit-error-rate (BER) versus an OSNR for a 16QAM in accordance with an implementation of the present disclosure;

FIG. 10 is an exemplary graphical representation of a measure of power spectral density (PSD) for nonlinear term X*conjugate(Y) in accordance with an implementation of the present disclosure;

FIG. 11 is a block diagram of a fiber-optic transmission apparatus in accordance with an implementation of the present disclosure; and

FIG. 12 is a flow diagram of a method of operating an encoder for fiber-optic communication in accordance with an implementation of the present disclosure.

## DETAILED DESCRIPTION OF THE DRAWINGS

Implementations of the present disclosure provide an encoder for fiber-optic communication that translates an information bit sequence into a modulation symbol sequence for modulating an optical carrier signal and a fiber-optic transmission apparatus having such encoder, for modulating the optical carrier signal.

To make solutions of the present disclosure more comprehensible for a person skilled in the art, the following implementations of the present disclosure are described with reference to the accompanying drawings.

Terms such as "a first", "a second", "a third", and "a fourth" (if any) in the summary, claims, and foregoing accompanying drawings of the present disclosure are used to distinguish between similar objects and are not necessarily used to describe a specific sequence or order. It should be understood that the terms so used are interchangeable under appropriate circumstances, so that the implementations of the present disclosure described herein are, for example, capable of being implemented in sequences other than the sequences illustrated or described herein. Furthermore, the terms "include" and "have" and any variations thereof, are intended to cover a non-exclusive inclusion. For example, a process, a method, a system, a product, or a device that includes a series of steps or units, is not necessarily limited to expressly listed steps or units but may include other steps or units that are not expressly listed or that are inherent to such process, method, product, or device.

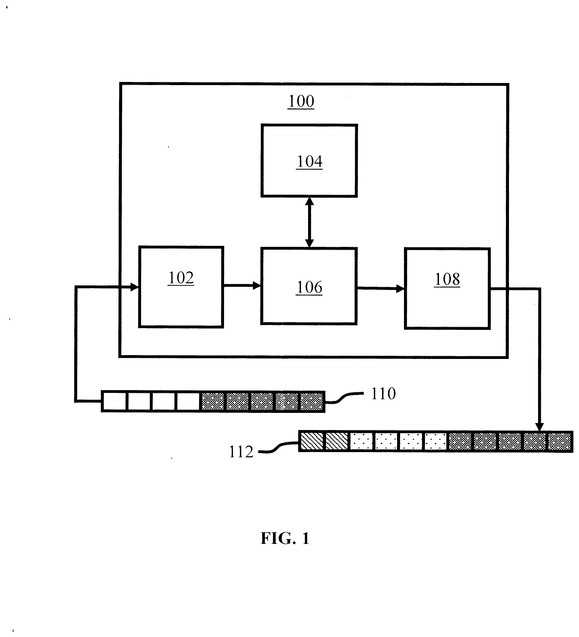

FIG. 1 is a block diagram of an encoder 100 for fiber-optic communication in accordance with an implementation of the present disclosure. The encoder **100** includes an input **102,** a digital signal processor (DSP) **106,** and an output **108.** The input **102** is configured to receive an information bit sequence **110.** The digital signal processor (DSP) **106** is configured to translate the information bit sequence **110** into a modulation symbol sequence **112** for modulating an optical carrier signal. The output **108** is configured to output the modulation symbol sequence **112.** The information bit sequence **110** may be a bit sequence or a representation of digital content in an assembly of a fundamental unit of digital bits. The optical carrier signal is a waveform that is modulated (or modified) with an information signal (or message signal) for a purpose of conveying information or a message.

The DSP 106 is configured to translate the information bit sequence **110** into the modulation symbol sequence **112** such that the modulation symbol sequence **112** has, among all symbol sequences in a candidate set of symbol sequences, a smallest value of a metric. The symbol sequences in the candidate set are different representations of the information bit sequence **110** in a symbol space. The symbol space optionally means a dimension where information can be expressed or transferred.

The metric is defined as:

$$S = \sum_{m \in M}\left[w_{XX,m} \cdot S_{XX,m} + w_{YY,m} \cdot S_{YY,m} + w_{XY,m} \cdot S_{XY,m}\right] \quad \text{........ formula (1)}$$

for any symbol sequence Z = (Z[0], ..., Z[N - 1]) in the candidate set, where

N is a common length of the symbol sequences in the candidate set,

Z[k] is a symbol at a position k in the symbol sequence (Z[0], ... , Z[N - 1]), $k \in \{0, ..., N - 1\}$,

the symbol Z[k] includes one or both of the following: a complex-valued first symbol X[k] related to a first polarization and a complex-valued second symbol Y[k] related to a second polarization,

S is a value of the metric,

$m$ is a summation index,

$M$ is a set of one or more whole numbers in the range of $-N + 2$ to $N - 2$,

$\sum_{m \in M}$ means summation over all values of $m$ in M, where m=0 to N-1,

$w_{XX,m}$, $w_{XY,m}$, $w_{YY,m}$ are real-valued weights that depend on the value of $m$,

$S_{XX,m}$, $S_{XY,m}$, $S_{XY,m}$ are non-negative numbers defined as

$$S_{XX,m} = \left| \sum_{k \in K} X[k]X^*[k+m] \right|^{\alpha} ,$$

$$S_{YY,m} = \left| \sum_{k \in K} Y[k]Y^*[k+m] \right|^{\alpha} ,$$

$$S_{XY,m} = \left| \sum_{k \in K} X[k]Y^*[k+m] \right|^{\alpha} ,$$

$|\ |$ means an absolute value of a complex number,

$\alpha$ is a positive real number, $(\ )^{\alpha}$ means "to the power of $\alpha$",

$k$ is a summation index,

$K$ is a set of one or more whole numbers,

$\sum_{k \in K}$ means summation over all values $k$ in $K$, and

$(\ )^*$ means complex conjugation.

The encoder **100** may further include a memory **104** that stores one or more code words (i.e. a code book). The memory **104** may be communicatively coupled with the DSP **106**. The code book may be a binary code book. The code book may be used to shape one or more bits of the information bit sequence 110. Each code word may include N coding bits, where N is a natural number. The information bit sequence **110** may include M data bits, where M is a natural number greater than N. The encoder **100** may use the code book to generate the candidate set of symbol sequences.

Further, the output **108** may be connected or connectable to an optical transmitter. The length of the symbol sequences is optionally equal to a number of elements of the symbol sequences.

In a first implementation, the set K includes at least one number that is different from zero. In a second implementation, non-cyclic definition of $[k + m]$, form $\in \{0, ..., N - 2\}$, includes

$$S_{XX,m} = \left| \sum_{k=0}^{N-1-m} X[k]X^*[k+m] \right|^{\alpha} ,$$

$$S_{YY,m} = \left| \sum_{k=0}^{N-1-m} Y[k]Y^*[k+m] \right|^{\alpha} ,$$

$$S_{XY,m} = \left| \sum_{k=0}^{N-1-m} X[k]Y^*[k+m] \right|^{\alpha}.$$

The non-cyclic definition of [k + m], for $m \in \{-N + 2, ..., -1\}$, may include

$$S_{XX,m} = \left| \sum_{k=-m}^{N-1} X[k]X^*[k+m] \right|^{\alpha},$$

$$S_{YY,m} = \left| \sum_{k=-m}^{N-1} Y[k]Y^*[k+m] \right|^{\alpha},$$

$$S_{XY,m} = \left| \sum_{k=-m}^{N-1} X[k]Y^*[k+m] \right|^{\alpha}.$$

In a third implementation, cyclic definition of [k + m], includes

$$S_{XX,m} = \left| \sum_{k=0}^{N-1} X[k]X^*[k+m] \right|^{\alpha},$$

$$S_{YY,m} = \left| \sum_{k=0}^{N-1} Y[k]Y^*[k+m] \right|^{\alpha},$$

$$S_{XY,m} = \left| \sum_{k=0}^{N-1} X[k]Y^*[k+m] \right|^{\alpha},$$

for any $m \in M$, with the following cyclic definitions:

$$X[k + p*N] = X[k],$$

$$Y[k + p*N] = Y[k],$$

$$p \in \{-1, 0, 1\}.$$

In a fourth implementation, the set $M$ is a superset of at least one of the following sets:

$$\{0,1\}, \quad \{-1,0\}, \quad \{-1,0,1\},$$

$$\{0,1,2\}, \quad \{-2,-1,0\}, \quad \{-2,-1,0,1,2\},$$

$$\{0,1,2,3\}, \{-3,-2,-1,0\}, \{-3,-2,-1,0,1,2,3\},$$

where M=3. Optionally, M is natural number 1,2,3,4,5,6, etc.

In a fifth implementation, where $\alpha = 1$. For example, power = 1. The encoder **100** may be used in phase-shift keying (PSK) modulation, amplitude and phase shift keying (APSK) modulation, quadrature-amplitude modulation (QAM), or pulse-amplitude modulation (PAM).

In a sixth implementation, each of *X[k]* and *Y[k]* is complex-valued. Each of *X[k]* and *Y[k]* may be real-valued. Each of *X[k]* and *Y[k]* is optionally an amplitude and phase shift keying (APSK) symbol. Each of *X[k]* and *Y[k]* may be a quadrature-amplitude modulation (QAM) symbol. Each of *X[k]* and *Y[k]* may be a pulse-amplitude modulation (PAM) symbol.

The modulation symbol sequence **112** with a minimized nonlinear metric may reduce optical nonlinear effects such as self-phase modulation (SPM), cross phase modulation (XPM), and four-wave mixing (FWM) together during propagation of the optical carrier signal.

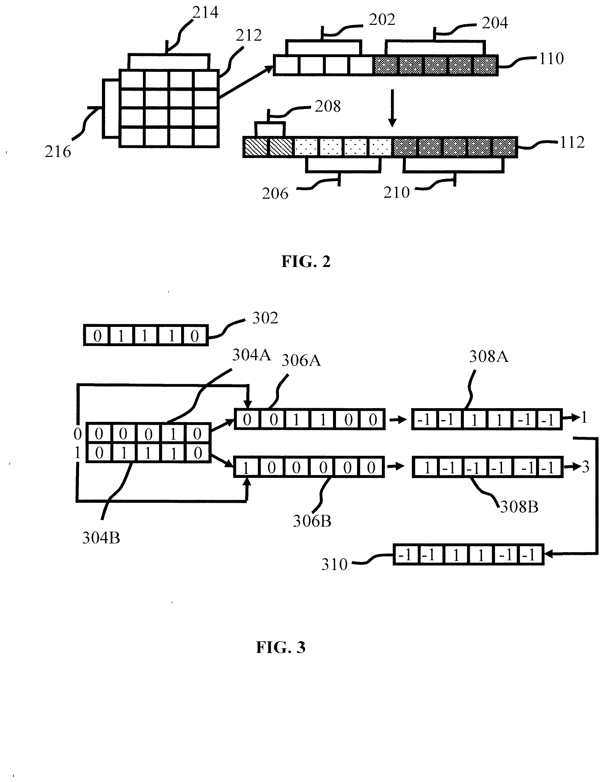

With reference to FIG.1, FIG. 2 is an exemplary schematic illustration of a process of translating the information bit sequence **110** into the modulation symbol sequence **112** using the encoder **100** of FIG.1 in accordance with an implementation of the present disclosure. The DSP **106** may translate the information bit sequence **110** into the modulation symbol sequence **112** by encoding one or more bits of the information bit sequence **110** using one or more code words of a code book **212.** The information bit sequence **110** may include a shaping block **202** to be encoded, and an information block **204** not to be encoded. The DSP **106** may be configured to generate the candidate set of symbol sequences by generating a plurality of shaped bit sequences, each of the shaped bit sequences being a representation of the information bit sequence **110** and mapping each shaped bit sequence to the symbol space. The DSP **106** may be configured to obtain the modulation symbol sequence **112** by selecting, among the symbol sequences in the candidate set, a symbol sequence that has the smallest value of the metric.

Each of the plurality of shaped bit sequences may include an encoded form of the information bit sequence **110,** and an indication of a code word for decoding the encoded form. The encoded form of the information bit sequence **110** may include one or more non-encoded bits of the information bit sequence **110.** The encoded form of the information bit sequence **110** may not include any non-encoded bits of the information bit sequence **110.** For example, the modulation symbol sequence **112** includes encoded bits **206** of the information bit sequence **110,** and an indication **208** of the code word of the code book **212** for decoding the encoded bits **206.** Optionally, the modulation symbol sequence **112** includes non-encoded bits **210** of the information bit sequence **110.** The modulation symbol sequence **112** may not include any non-encoded bits of the information bit sequence **110** (not shown in FIG.2).

The DSP **106** is configured to generate the encoded form of the information bit sequence **110** by applying the code word to the information bit sequence **110.** Applying the code word to the information bit sequence **110** may include, for each bit of the code word, a logical XOR operation on a pair of bits, the bit pair of bits including the bit of the code word, and a bit of the information bit sequence **110.** In the code book **212,** a length of the code word may be represented as **214** and a size of the code book **212** may be represented as **216.** The length of the code word **214** may be equal to a length of the shaping block **202** of the information bit sequence **110.** A number of the code word may be a power of 2.

The DSP **106** may apply the code word to the information bit sequence **110** by performing the logical XOR operation on the pair of bits. The pair of bits include the bit of the code word and the bit of the information bit sequence **110.** The DSP **106** may generate the encoded bits **206** of the modulation symbol sequence **112** by applying the code word of the code book **212** to the information bit sequence **110.** The DSP 106 may convert an index of the code word to a binary image and add the binary image as the indication of the code word in each of the shaped bit sequence.

After applying the code word, the DSP **106** may calculate a value of the metric S for each of the shaped bit sequences using the formula (1) as illustrated above, resulting value of the metric S may be presented as linear combination of them, weights $w_{XX,m}$, $w_{XY,m}$, $w_{YY,m}$ may be optimized for application. The shaping block **202** with an applied code word corresponding to a minimal metric value has added as the encoded bits **206** in the modulation symbol sequence **112.** The information block **204** may be added in the modulation symbol sequence **112** without changes.

The metric S may be a measure of expected distortion. The expected distortion is a distortion of a hypothetical optical carrier signal that is modulated with the symbol sequence Z and transmitted via the optical fiber. A measure of the metric S may be depended on the weights $w_{XX,m}$, $w_{XY,m}$, $w_{YY,m}$. The weights may be set at a factory. The weights can be hard-coded or soft-coded. The weights may be chosen (e.g. based on experiments conducted prior to production of the encoder **100**) such that the encoder **100** may select a symbol sequence that may yield a modulated optical carrier signal which will be less affected by the distortion when propagating through the optical fiber, compared to other symbol sequences in the candidate set.

With reference to FIG.1, FIG. 3 is an exemplary schematic illustration of a process of translating an information bit sequence **302** into a modulation symbol sequence **310** for a binary phase shift keying (BPSK) modulation in accordance with an implementation of the present disclosure. The BPSK modulation is a two-phase modulation scheme, where the 0's and 1's in a binary message are represented by two different phase states in an optical carrier signal: $\theta = 0^0$ for binary 1 and $\theta = 180^0$ for binary 0. The input **102** of the encoder **100** may receive the information bit sequence **302.** The DSP 106 may translate the information bit sequence **302** into the modulation symbol sequence **310** for modulating the optical carrier signal. The output **108** may output the modulation symbol sequence **310** to the optical transmitter for modulating the optical carrier signal with the modulation symbol sequence **310.** In the BPSK modulation, 0 and 1 bits may correspond to -1 and 1 values. One polarization and one criteria Sxx,1 are considered. For example, *Z[k]* includes only a first symbol *X[k]* and no further symbol, and the metric may be defined as

$$S = \sum_m w_{XX,m} \cdot S_{XX,m} \; .$$

The term $w_{YY,m} \cdot S_{YY,m} + w_{XY,m} \cdot S_{XY,m}$ in the above formula for the value of the metric S may be zero.

The DSP **106** may apply a first code word **304A** and a second code word **304B** to the information bit sequence **302.** The DSP **106** may perform the logical XOR operation between the information bit sequence **302** and the first code word **304A** and the second code word **304B** to generate a first shaped bit sequence **306A** and a second shaped bit sequence **306B.** The first shaped bit sequence **306A** may be a first representation of the information bit sequence **302.** The second shaped bit sequence **306B** may be a second representation of the information bit sequence **302.** Further, the DSP **106** places a binary number of the first code word **304A** and the second code word **304B** as a first bit of the first shaped bit sequence **306A** and the second shaped bit sequence **306B,** after the XOR operation. The DSP 106 may map the first shaped bit sequence **306A** and the second shaped bit sequence **306B** to the symbol space to generate a first symbol sequence **308A** and a second symbol sequence **308B** respectively. The binary number of the first code word **304A** and the second code word **304B** may represent as an indication of the first code word **304A** and the second code word **304B** for decoding an encoded form of the first shaped bit sequence **306A** and the second shaped bit sequence **306B.** The DSP **106** derives a first metric value as 1 for the first symbol sequence **308A** and a second metric value as 3 for the second symbol sequence **308B.** The DSP **106** may select the second symbol sequence **306B,** among the first symbol sequence **306A** and the second symbol sequence **306B,** as the modulation symbol sequence **310** that has a smallest value of the metric. The modulation symbol sequence **310** may be used to modulate the optical carrier signal.

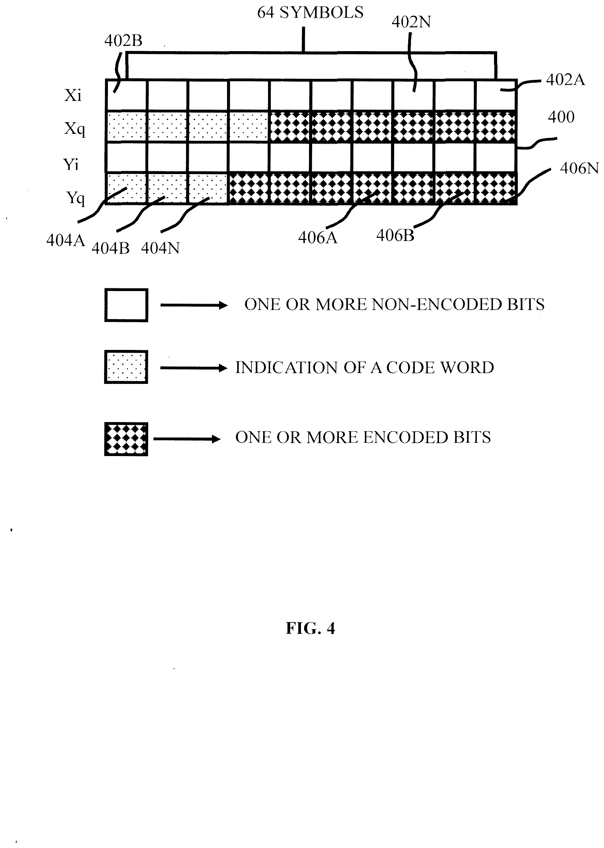

FIG. 4 is an exemplary schematic illustration of a quadrature phase shift keying (QPSK) shaping in accordance with an implementation of the present disclosure. The QPSK is a form of phase shift keying in which two bits are modulated at once, selecting one of four possible carrier phase shifts (0, 90, 180, or 270 degrees). A QPSK modulation may be used in submarine application. Each QPSK symbol is described with 2 bits (I and Q) with Gray mapping. For X and Y polarization, 4 bits per symbol Xi, Xq, Yi, and Yq are considered. In FIG. 4, a code book with 128 code words may be used at each 64 symbols. Shaping cost of an information bit sequence is 7/256, i.e. 0.11 bit/symbol (~3%) rate loss. The Xq and Yq bits are encoded with the code book. First 4 (or 3) bits of Xq and 3 (or 4) bits of Yq are placed with an indication of the code word. Nonlinear metrics of m=0, 1, 2 orders are used. A modulated symbol sequence **400** is represented in FIG. 4 after quadrature phase shift keying (QPSK) shaping. The modulated symbol sequence **400** includes one or more non-encoded bits **402A-N,** an indication of the code word **404A-N,** and one or more encoded bits **406A-N.** The one or more non-encoded bits **402A-N,** and the one or more encoded bits **406A-N** may be an encoded form of the information bit sequence.

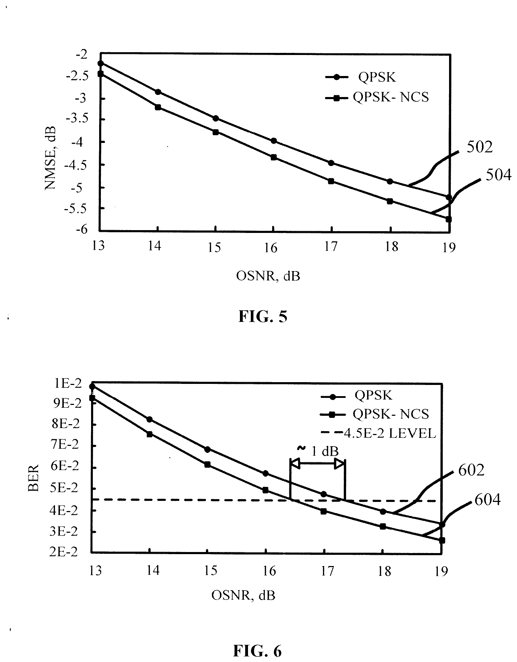

With reference to FIG. 4, FIG. 5 is an exemplary graphical representation of a normalized mean squared error (NMSE) versus an optical signal-to-noise ratio (OSNR) for the QPSK modulation in accordance with an implementation of the present disclosure. The following simulation conditions are considered for the QPSK modulation: (1) QPSK modulation with and without nonlinear shaping of an information bit sequence, (2) 100 gigahertz (GHz) frequency band for each optical channel, (3) 11 optical channels, (4) 120 GHz optical channel spacing, (5) roll-off factor (RRC) as 0.1, (6) 5 decibel-milliwatts (dBm) of input power per optical channel, (7) 16.89 picoseconds/kilometer (ps/km) dispersion, (8) 1/Watt/kilometer (1/W/km) Kerr nonlinearity (including factor 8/9), (9) 0.18 decibel/kilometer (dB/km) attenuation, (10) 80 kilometer (km) span length, and (11) 140 spans (11200 km). In the exemplary graphical representation, the OSNR is plotted in an X-axis and the NMSE is plotted in a Y-axis. The NMSE is mean square error (MSE) normalized by variance of desired values. In order to evaluate a performance of an optical carrier signal after nonlinear shaping, the NMSE is plotted against the OSNR. In the exemplary graphical representation, a NMSE/OSNR curve **502** represents the QPSK modulation without encoding (i.e. without nonlinear shaping) the information bit sequence into the modulation symbol sequence **400** for modulating the optical carrier signal. A NMSE/OSNR curve **504** represents the QPSK modulation with encoding (i.e. with nonlinear shaping) the information bit sequence into the modulation symbol sequence **400** for modulating the optical carrier signal. The exemplary graphical representation as shown in FIG. 5 illustrates that the performance of the optical carrier signal, which is modulated with the modulation symbol sequence **400,** is increased. An increase in the OSNR may increase an optical network throughput and energy efficiency and it enables to minimize a number of retransmissions of information.

With reference to FIG. 4 and FIG. 5, FIG. 6 is an exemplary graphical representation of a bit-error-rate (BER) versus an OSNR for the QPSK modulation in accordance with an implementation of the present disclosure. In the exemplary graphical representation, the OSNR is plotted in an X-axis, and the BER is plotted in a Y-axis. The BER is defined as the percentage of bits that have errors relative to a total number of bits received in a transmission. The OSNR may be used to quantify a degree of optical noise interference in an optical carrier signal. In the exemplary graphical representation, a BER/OSNR curve **602** represents the QPSK modulation without encoding (i.e. without nonlinear shaping) the information bit sequence into the modulation symbol sequence **400** for modulating the optical carrier signal. A BER/OSNR curve **604** represents the QPSK modulation with encoding (i.e. with nonlinear shaping) the information bit sequence into the modulation symbol sequence **400** for modulating the optical carrier signal. The exemplary graphical representation, as shown in FIG. 6, illustrates that 1dB OSNR improvement is achieved at BER 4.5E-2 level.

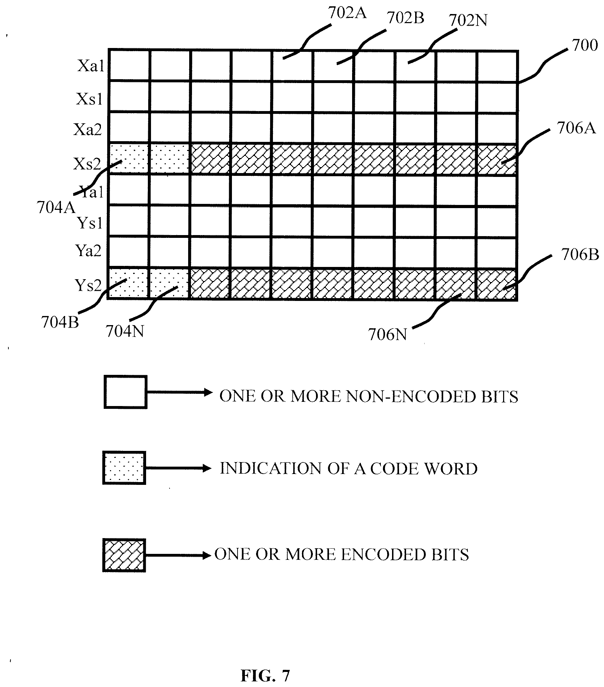

FIG. 7 is an exemplary schematic illustration of a 16 quadrature amplitude modulation (16QAM) shaping in accordance with an implementation of the present disclosure. The 16QAM is a higher order modulation technique, which allows one single radio wave to represent four bits of data by manipulating an amplitude and a phase of the radio wave into one of 16 different discrete and measurable states. The 16QAM may be used for long haul applications. The following simulation conditions are considered for 16QAM: (1) Each 16QAM symbol is described with 4 bits, (2) use of Gray mapping (e.g. 2 amplitude bits and 2 sign bits), (3) for X and Y polarization, 8 bits per symbol Xa1, Xa2, Xs1, Xs2, Ya1, Ya2, Ys1, Ys2 are considered, (4) a code book with 16 code words is used at each 64 symbols, (5) shaping cost of an information bit sequence is 4/512, i.e. 0.06 bit/symbol (~0.8%), (6) Xs2 and Ys2 bits are shaped using the code book, (7) first 2 bits of Xs2 and Ys2 are placed with an indication of the code word, (8) nonlinear metrics of m=0, 1 and 2 orders are used. A modulated symbol sequence **700** is represented in FIG. 7 after 16QAM shaping. The modulated symbol sequence **700** includes one or more non-encoded bits **702A-N,** an indication of the code word **704A-N,** and one or more encoded bits **706A-N.** The one or more non-encoded bits **702A-N,** and the one or more encoded bits **706A-N** may be an encoded form of the information bit sequence.

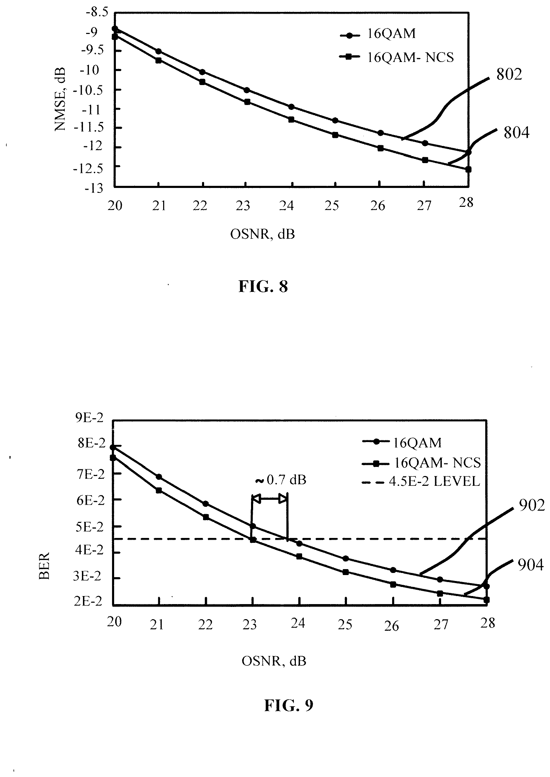

With reference to FIG. 7, FIG. 8 is an exemplary graphical representation of a normalized mean squared error (NMSE) versus an optical signal-to-noise ratio (OSNR) for the 16QAM in accordance with an implementation of the present disclosure. In the exemplary graphical representation, the OSNR is plotted in an X-axis and the NMSE is plotted in a Y-axis. In the exemplary graphical representation, a NMSE/OSNR curve **802** represents the 16QAM without encoding (i.e. without nonlinear shaping) an information bit sequence into the modulation symbol sequence **700** for modulating an optical carrier signal. A NMSE/OSNR curve **804** represents the 16QAM with encoding (i.e. with nonlinear shaping) the information bit sequence into the modulation symbol sequence **700** for modulating the optical carrier signal. The exemplary graphical representation as shown in FIG. 8 illustrates that the performance of the optical carrier signal, which is modulated with the modulation symbol sequence **700,** is increased. An increase in the OSNR may increase an optical network throughput and energy efficiency and it enables to minimize a number of retransmissions of information.

With reference to FIG. 7 and FIG. 8, FIG. 9 is an exemplary graphical representation of a bit-error-rate (BER) versus an OSNR for the 16QAM in accordance with an implementation of the present disclosure. In the exemplary graphical representation, the OSNR is plotted in an X-axis and BER is plotted in a Y-axis. A BER/OSNR curve **902** represents the 16QAM without encoding (i.e. without nonlinear shaping) an information bit sequence into the modulation symbol sequence **700** for modulating an optical carrier signal. A BER/OSNR curve **904** represents the 16QAM with encoding (i.e. with nonlinear shaping) the information bit sequence into the modulation symbol sequence **700** for modulating the optical carrier signal. The exemplary graphical representation, as shown in FIG. 9, illustrates that 0.7 decibel (dB) OSNR improvement is achieved at BER 4.5E-2 level.

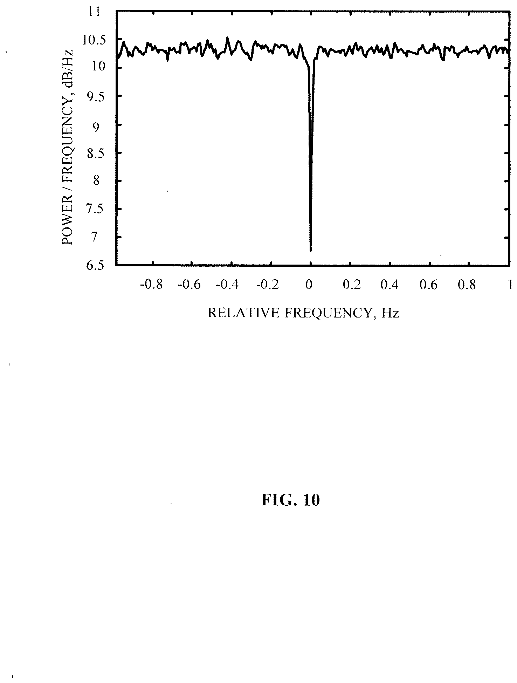

FIG. 10 is an exemplary graphical representation of power spectral density (PSD) for nonlinear term X*conjugate(Y) in accordance with an implementation of the present disclosure. In the exemplary graphical representation, a relative frequency is plotted in an X-axis and a power/frequency is plotted in a Y-axis. Minimization of single or dual polarization nonlinear metrics is presented as low frequency PSD suppression of corresponding nonlinear terms. The nonlinear terms for an optical carrier signal for 16 quadrature amplitude modulation (QAM) or phase shift keying (PSK) modulator is calculated by:

$$X \cdot delay\left(X^*, k\right), \; X \cdot delay\left(Y^*, k\right), \; Y \cdot delay\left(Y^*, k\right), \ldots\ldots\ldots(1)$$

Where delay ($X,k$) means delay $X$ at $k$ samples

$$X \cdot delay\left(X^*, 0\right) = |X|^2, \; Y \cdot delay\left(Y^*, 0\right) = |Y|^2, \qquad (2)$$

Any PSD of presented nonlinear term, excluding (2) which demonstrates low frequency suppression. PSD estimated at big enough block size shows suppression of nonlinear metric as shown in FIG. 10. Terms $|X|^2$, $|Y|^2$ may correspond to power shaping and their PSD low frequency suppression.

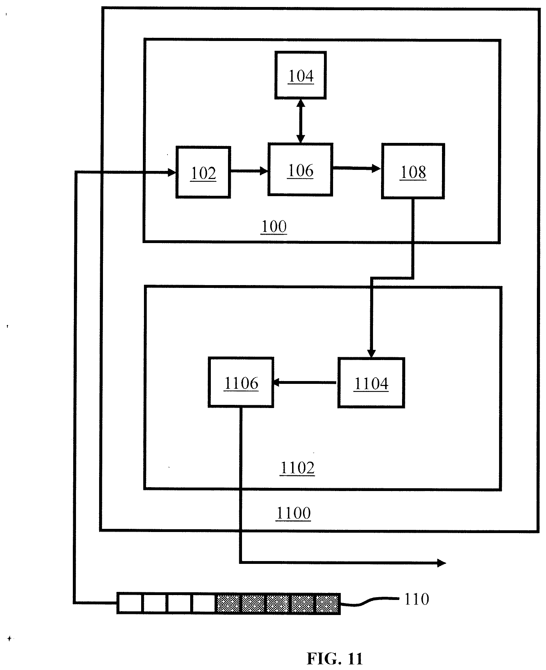

FIG. 11 is a block diagram of a fiber-optic transmission apparatus **1100** in accordance with an implementation of the present disclosure. The fiber-optic transmission apparatus **1100** includes the encoder **100** (as shown in FIG. 1) and an optical transmitter **1102.** The encoder **100** includes the input **102** that is configured to receive the information bit sequence **110,** the memory **104,** the digital signal processor **106,** and the output **108.** The optical transmitter **1102** includes an input **1104** that is connected to the output **108** of the encoder **100** and an output **1106** that is connected or connectable to an optical fiber. The optical transmitter **1102** is configured to modulate an optical carrier signal based on a modulation symbol

**EP 4 282 091 B1**

sequence, and output the modulated optical carrier signal at the output **1106** of the optical transmitter **702.** The optical transmitter **1102** may be a pulse amplitude modulation (PAM) transmitter, a quadrature amplitude modulation (QAM) transmitter, a binary phase shift keying (BPSK) modulation transmitter, and a quadrature phase shift keying (QPSK) modulation transmitter.

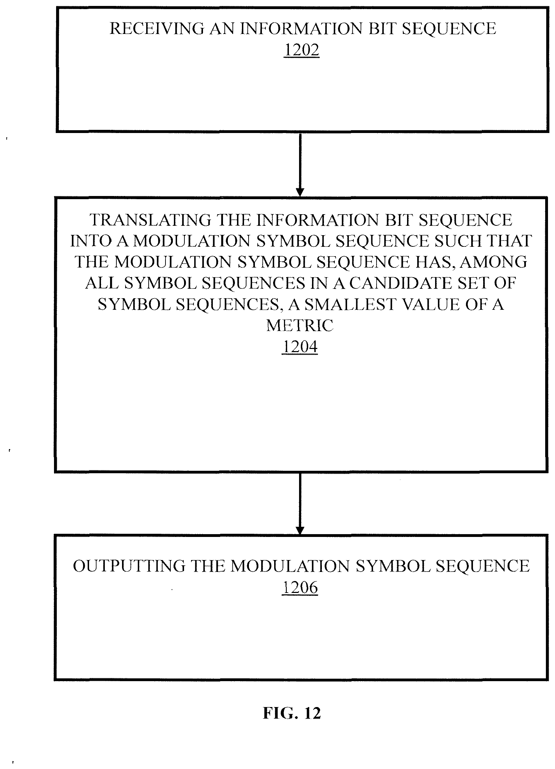

With reference to FIG. 1, FIG. 12 is a flow diagram of a method of operating the encoder 100 for fiber-optic communication in accordance with an implementation of the present disclosure. At a step **1202**, the information bit sequence **110** is received at the input **102** of the encoder **100**. At a step **1204**, the information bit sequence **110** is translated into the modulation symbol sequence **112** such that the modulation symbol sequence **112** has, among all symbol sequences in a candidate set of symbol sequences, a smallest value of a metric. At a step **1206**, the modulation symbol sequence **112** is outputted at the output **108**. The modulation symbol sequence **112** may be provided as an input to the optical transmitter for modulating the optical carrier signal.

Although the present disclosure and its advantages have been described in detail, it should be understood that various changes, substitutions, and alterations can be made herein without departing from the scope of the present disclosure as defined by the appended claims.

**Claims**

1.  An encoder (100) for fiber-optic communication, comprising:

    an input (102) for receiving an information bit sequence (110, 302);
    a digital signal processor, DSP, (106) configured to translate the information bit sequence (110, 302) into a modulation symbol sequence (112, 310, 400, 700) for modulating an optical carrier signal; and
    an output (108) configured to output the modulation symbol sequence (112, 310, 400, 700),
    wherein the DSP (106) is configured to translate the information bit sequence (110, 302) into the modulation symbol sequence (112, 310, 400, 700) such that the modulation symbol sequence (112, 310, 400, 700) has, among all symbol sequences in a candidate set of symbol sequences, a smallest value of a metric, wherein the symbol sequences in the candidate set are different representations of the information bit sequence (110, 302) in a symbol space,
    wherein the metric is defined as

    $$S = \sum_{m \in M} \left[ w_{XX,m} \cdot S_{XX,m} + w_{YY,m} \cdot S_{YY,m} + w_{XY,m} \cdot S_{XY,m} \right]$$

    for any symbol sequence $Z = (Z[0], ..., Z[N - 1])$ in the candidate set, wherein
    $N$ is a common length of the symbol sequences in the candidate set,
    $Z[k]$ is a symbol at a position $k$ in the symbol sequence $(Z[0], ..., Z[N - 1])$, $k \in \{0, ..., N - 1\}$,
    the symbol $Z[k]$ comprises one or both of the following: a complex-valued first symbol $X[k]$ related to a first polarization and a complex-valued second symbol $Y[k]$ related to a second polarization,
    S is a value of the metric,
    $m$ is a summation index,
    $M$ is a set of one or more whole numbers in the range of $-N + 2$ to $N - 2$,
    $\sum_{m \in M}$ means summation over all values of $m$ in M, where m=0 to N-1,
    $w_{XX,m}, w_{XY,m}, w_{YY,m}$ are real-valued weights that depend on the value of $m$,
    $S_{XX,m}, S_{XY,m}, S_{XY,m}$ are non-negative numbers defined as

    $$S_{XX,m} = \left| \sum_{k \in K} X[k] X^*[k + m] \right|^\alpha,$$

    $$S_{YY,m} = \left| \sum_{k \in K} Y[k] Y^*[k + m] \right|^\alpha,$$

$$S_{XY,m} = \left| \sum_{k \in K} X[k]Y^*[k+m] \right|^{\alpha} ,$$

| | means an absolute value of a complex number,
$\alpha$ is a positive real number, $(\ )^{\alpha}$ means "to the power of $\alpha$",
$k$ is a summation index,
$K$ is a set of one or more whole numbers,
$\sum_{k \in K}$ means summation over all values $k$ in $K,$ and
$(\ )^*$ means complex conjugation.

2. The encoder (100) of claim 1, wherein the set K includes at least one number that is different from zero.

3. The encoder (100) of claim 1 or 2, wherein

$$S_{XX,m} = \left| \sum_{k=0}^{N-1-m} X[k]X^*[k+m] \right|^{\alpha} ,$$

$$S_{YY,m} = \left| \sum_{k=0}^{N-1-m} Y[k]Y^*[k+m] \right|^{\alpha} ,$$

$$S_{XY,m} = \left| \sum_{k=0}^{N-1-m} X[k]Y^*[k+m] \right|^{\alpha} ,$$

form $\in \{0, ..., N - 2\}$
and wherein

$$S_{XX,m} = \left| \sum_{k=-m}^{N-1} X[k]X^*[k+m] \right|^{\alpha} ,$$

$$S_{YY,m} = \left| \sum_{k=-m}^{N-1} Y[k]Y^*[k+m] \right|^{\alpha} ,$$

$$S_{XY,m} = \left| \sum_{k=-m}^{N-1} X[k]Y^*[k+m] \right|^{\alpha} .$$

for $m \in \{-N + 2, ..., -1\}$.

4. The encoder (100) of claim 1 or 2, wherein

$$S_{XX,m} = \left| \sum_{k=0}^{N-1} X[k]X^*[k+m] \right|^{\alpha} ,$$

$$S_{YY,m} = \left| \sum_{k=0}^{N-1} Y[k]Y^*[k+m] \right|^{\alpha} ,$$

$$S_{XY,m} = \left| \sum_{k=0}^{N-1} X[k]Y^*[k+m] \right|^{\alpha} ,$$

for any $m \in$ M, with the following cyclic definitions:

$$X[k + p * N] = X[k] ,$$

$$Y[k + p * N] = Y[k] ,$$

$$p \in \{-1, 0, 1\} .$$

5. The encoder (100) of any one of claims 1 to 4, wherein the set M is a superset of at least one of the following sets:

$$\{0,1\}, \quad \{-1,0\}, \quad \{-1,0,1\},$$

$$\{0,1,2\}, \quad \{-2,-1,0\}, \quad \{-2,-1,0,1,2\},$$

$$\{0,1,2,3\}, \; \{-3,-2,-1,0\}, \; \{-3,-2,-1,0,1,2,3\},$$

where M=3.

6. The encoder (100) of any one of claims to 5, wherein $\alpha$ = 1.

7. The encoder (100) of any one of claims to 6, wherein $Z[k]$ comprises only the first symbol $X[k]$ and no further symbol, and the metric is defined as

$$S = \sum_{m} w_{XX,m} \cdot S_{XX,m} .$$

8. The encoder (100) of any one of claims to 7, wherein the metric S is a measure of expected distortion, the expected distortion being distortion of a hypothetical optical carrier signal that is modulated with the symbol sequence Z and transmitted via an optical fiber.

9. The encoder (100) of any one of claims to 8, wherein each of $X[k]$ and $Y[k]$ is complex-valued.

10. The encoder (100) of claim 9, wherein each of $X[k]$ and $Y[k]$ is an amplitude and phase shift keying, APSK, symbol.

11. The encoder (100) of claim 9, wherein each of $X[k]$ and $Y[k]$ is a quadrature-amplitude modulation, QAM, symbol.

12. The encoder (100) of any one of claims to 8, wherein each of $X[k]$ and $Y[k]$ is real-valued.

13. The encoder (100) of claim 12, wherein each of $X[k]$ and $Y[k]$ is a pulse-amplitude modulation, PAM, symbol.

14. A fiber-optic transmission apparatus (700), comprising:

the encoder (100) of any one of claims to 13; and
an optical transmitter (702),
the optical transmitter (702) having an input (704) connected to the output (108) of the encoder (100) and an output (706) connected or connectable to an optical fiber.

15. The fiber-optic transmission apparatus (700) of claim 14, wherein the optical transmitter (702) is configured to:

modulate an optical carrier signal based on the modulation symbol sequence (112, 310, 400, 700), and output the modulated optical carrier signal at the output (706) of the optical transmitter (702).

**Patentansprüche**

1. Kodierer (100) für faseroptische Übertragung, umfassend:

einen Eingang (102) zum Empfangen einer Informationsbitfolge (110, 302);
einen digitalen Signalprozessor, DSP, (106), der dazu konfiguriert ist, die Informationsbitfolge (110, 302) in eine Modulationssymbolfolge (112, 310, 400, 700) zum Modulieren eines optischen Trägersignals zu übersetzen; und einen Ausgang (108), der dazu konfiguriert ist, die Modulationssymbolfolge (112, 310, 400, 700) auszugeben, wobei der DSP (106) dazu konfiguriert ist, die Informationsbitfolge (110, 302) in die Modulationssymbolfolge (112, 310, 400, 700) zu übersetzen, so dass die Modulationssymbolfolge (112, 310, 400, 700) unter allen Symbolfolgen in einer Kandidatenmenge von Symbolfolgen einen kleinsten Wert einer Metrik aufweist, wobei die Symbolfolgen in der Kandidatenmenge unterschiedliche Darstellungen der Informationsbitfolge (110, 302) in einem Symbolraum sind,
wobei die Metrik definiert ist als

$$S = \sum_{m \in M} \left[ w_{XX,m} \cdot S_{XX,m} + w_{YY,m} \cdot S_{YY,m} + w_{XY,m} \cdot S_{XY,m} \right]$$

für eine beliebige Symbolfolge $Z = (Z[0], \dots, Z[N-1])$ in der Kandidatenmenge, wobei
$N$ eine gemeinsame Länge der Symbolfolgen in der Kandidatenmenge ist,
$Z[k]$ ein Symbol an einer Position $k$ in der Symbolfolge $(Z[0], \dots, Z[N-1])$, $k \in \{0, \dots, N-1\}$ ist,
das Symbol $Z[k]$ eines oder beide der Folgenden umfasst: ein komplexwertiges erstes Symbol $X[k]$, das sich auf eine erste Polarisation bezieht, und ein komplexwertiges zweites Symbol $Y[k]$, das sich auf eine zweite Polarisation bezieht,
$S$ ein Wert der Metrik ist,
$m$ ein Summierungsindex ist,
M eine Menge von einer oder mehreren ganzen Zahlen in dem Bereich von $-N + 2$ bis $N - 2$ ist,
$\sum_{m \in M}$ Summierung über alle Werte von $m$ in M bedeutet, wobei m=0 bis N-1,
$w_{XX,m}, w_{XY,m}, w_{YY,m}$ reellwertige Gewichtungen sind, die von dem Wert von $m$ abhängen,
$S_{XX,m}, S_{XY,m}, S_{XY,m}$ nicht-negative Zahlen sind, die definiert sind als

$$S_{XX,m} = \left| \sum_{k \in K} X[k]X^{\bullet}[k+m] \right|^{\alpha},$$

$$S_{YY,m} = \left| \sum_{k \in K} Y[k]Y^{\bullet}[k+m] \right|^{\alpha},$$

$$S_{XY,m} = \left| \sum_{k \in K} X[k]Y^{\bullet}[k+m] \right|^{\alpha},$$

| | einen Absolutwert einer komplexen Zahl bedeutet,
$\alpha$ eine positive reelle Zahl ist, $()^{\alpha}$ "hoch $\alpha$" bedeutet,
$k$ ein Summierungsindex ist,
$K$ eine Menge aus einer oder mehreren ganzen Zahlen ist,
$\sum_{k \in K}$ Summierung über alle Werte $k$ in K bedeutet und
$()^*$ komplexe Konjugation bedeutet.

2. Kodierer (100) nach Anspruch 1, wobei die Menge K mindestens eine Zahl beinhaltet, die von Null verschieden ist.

3. Kodierer (100) nach Anspruch 1 oder 2, wobei

$$S_{XX,m} = \left| \sum_{k=0}^{N-1-m} X[k]X^{\bullet}[k+m] \right|^{\alpha},$$

$$S_{YY,m} = \left| \sum_{k=0}^{N-1-m} Y[k]Y^{\bullet}[k+m] \right|^{\alpha},$$

$$S_{XY,m} = \left| \sum_{k=0}^{N-1-m} X[k]Y^{\bullet}[k+m] \right|^{\alpha},$$

für $m \in \{0, ...,N-2\}$
und wobei

$$S_{XX,m} = \left| \sum_{k=-m}^{N-1} X[k]X^{\bullet}[k+m] \right|^{\alpha},$$

$$S_{YY,m} = \left| \sum_{k=-m}^{N-1} Y[k]Y^{\bullet}[k+m] \right|^{\alpha},$$

$$S_{XY,m} = \left| \sum_{k=-m}^{N-1} X[k]Y^{\bullet}[k+m] \right|^{\alpha}.$$

für $m \in \{-N+2, ... , -1\}$.

4. Kodierer (100) nach Anspruch 1 oder 2, wobei

$$S_{XX,m} = \left| \sum_{k=0}^{N-1} X[k]X^{\bullet}[k+m] \right|^{\alpha},$$

$$S_{YY,m} = \left| \sum_{k=0}^{N-1} Y[k]Y^{\bullet}[k+m] \right|^{\alpha},$$

$$S_{XY,m} = \left| \sum_{k=0}^{N-1} X[k]Y^{\bullet}[k+m] \right|^{\alpha},$$

für ein beliebiges $m \in$ M mit den folgenden zyklischen Definitionen:

$$X[k + p * N] = X[k],$$

$$Y[k + p * N] = Y[k],$$

$$P \in \{-1,0,1\}.$$

**5.** Kodierer (100) nach einem der Ansprüche 1 bis 4, wobei die Menge *M* eine Obermenge von mindestens einer der folgenden Mengen ist:

$$\{0,1\}, \ \{-1,0\}, \ \{-1,0,1\},$$

$$\{0,1,2\}, \ \{-2, \ -1,0\}, \ \{-2, \ -1,0,1,2\},$$

$$\{0,1,2,3\}, \ \{-3, \ -2, \ -1,0\}, \ \{-3, \ -2, \ -1,0,1,2,3\},$$

wobei M=3.

**6.** Kodierer (100) nach einem der Ansprüche 1 bis 5, wobei $\alpha$ = 1.

**7.** Kodierer (100) nach einem der Ansprüche 1 bis 6, wobei $Z[k]$ nur das erste Symbol $X[k]$ und kein weiteres Symbol umfasst und die Metrik definiert ist als

$$S = \sum_{m} w_{XX,m} \cdot S_{XX,m}.$$

**8.** Kodierer (100) nach einem der Ansprüche 1 bis 7, wobei die Metrik S ein Maß für die erwartete Verzerrung ist, wobei die erwartete Verzerrung die Verzerrung eines hypothetischen optischen Trägersignals ist, das mit der Symbolfolge Z moduliert und über eine optische Faser gesendet wird.

**9.** Kodierer (100) nach einem der Ansprüche 1 bis 8, wobei $X[k]$ und $Y[k]$ jeweils komplexwertig sind.

**10.** Kodierer (100) nach Anspruch 9, wobei $X[k]$ und $Y[k]$ jeweils ein Amplituden- und Phasenumtastungssymbol, APSK-Symbol, sind.

**11.** Kodierer (100) nach Anspruch 9, wobei $X[k]$ und $Y[k]$ jeweils ein Quadraturamplitudenmodulationssymbol, QAM-Symbol, sind.

**12.** Kodierer (100) nach einem der Ansprüche 1 bis 8, wobei $X[k]$ und $Y[k]$ jeweils reellwertig sind.

**13.** Kodierer (100) nach Anspruch 12, wobei $X[k]$ und $Y[k]$ jeweils ein Pulsamplitudenmodulationssymbol, PAM-Symbol, sind.

**14.** Faseroptische Sendevorrichtung (700), umfassend:

den Kodierer (100) nach einem der Ansprüche 1 bis 13; und
einen optischen Sender (702),
wobei der optische Sender (702) einen Eingang (704), der mit dem Ausgang (108) des Kodierers (100) verbunden ist, und einen Ausgang (706), der mit einer optischen Faser verbunden ist oder verbindbar ist, aufweist.

**15.** Faseroptische Sendevorrichtung (700) nach Anspruch 14, wobei der optische Sender (702) zu Folgendem konfiguriert ist:

Modulieren eines optischen Trägersignals basierend auf der Modulationssymbolfolge (112, 310, 400, 700) und Ausgeben des modulierten optischen Trägersignals an dem Ausgang (706) des optischen Senders (702).

**Revendications**

1. Codeur (100) pour communication par fibre optique, comprenant :

une entrée (102) pour recevoir une séquence de bits d'information (110, 302) ;
un processeur de signal numérique, DSP, (106) configuré pour traduire la séquence de bits d'information (110, 302) en une séquence de symboles de modulation (112, 310, 400, 700) pour moduler un signal porteur optique ; et
une sortie (108) configurée pour délivrer la séquence de symboles de modulation (112, 310, 400, 700),
dans lequel le DSP (106) est configuré pour traduire la séquence de bits d'information (110, 302) en séquence de symboles de modulation (112, 310, 400, 700) de sorte que la séquence de symboles de modulation (112, 310, 400, 700) a, parmi toutes les séquences de symboles dans un ensemble candidat de séquences de symboles, une plus petite valeur d'une métrique, dans lequel les séquences de symboles de l'ensemble candidat sont des représentations différentes de la séquence de bits d'information (110, 302) dans un espace de symboles, dans lequel la métrique est définie comme

$$S = \sum_{m \in M} \left[ w_{XX,m} \cdot S_{XX,m} + w_{YY,m} \cdot S_{YY,m} + w_{XY,m} \cdot S_{XY,m} \right]$$

pour toute séquence de symboles $Z = (Z[0], \ldots, Z[N-1])$ dans l'ensemble candidat, dans lequel
$N$ est une longueur commune des séquences de symboles dans l'ensemble candidat,
$Z[k]$ est un symbole à une position $k$ dans la séquence de symboles $(Z[0], \ldots, Z[N-1])$, $k \in \{0, \ldots, N-1\}$,
le symbole $Z[k]$ comprend l'un ou les deux des éléments suivants : un premier symbole à valeurs complexes $X[k]$ lié à une première polarisation et un second symbole à valeurs complexes $Y[k]$ lié à une seconde polarisation,
$S$ est une valeur de la métrique,
$m$ est un indice de sommation,
$M$ est un ensemble d'un ou plusieurs nombres entiers dans la plage de $-N + 2$ à $N - 2$,
$\sum_{m \in M}$ signifie la somme de toutes les valeurs de $m$ dans $M$, où m=0 à N-1,
$w_{XX,m}$, $w_{XY,m}$, $w_{YY,m}$ sont des poids à valeur réelle qui dépendent de la valeur de $m$,
$S_{XX,m}$, $S_{XY,m}$, $S_{XY,m}$ sont des nombres non négatifs définis comme

$$S_{XX,m} = \left| \sum_{k \in K} X[k]X^*[k+m] \right|^{\alpha},$$

$$S_{YY,m} = \left| \sum_{k \in K} Y[k]Y^*[k+m] \right|^{\alpha},$$

$$S_{XY,m} = \left| \sum_{k \in K} X[k]Y^*[k+m] \right|^{\alpha},$$

| | signifie une valeur absolue d'un nombre complexe,
$\alpha$ est un nombre réel positif, $()^{\alpha}$ signifie « à la puissance $\alpha$ »,
$k$ est un indice de sommation,
$K$ est un ensemble d'un ou plusieurs nombres entiers,
$\sum_{k \in K}$ signifie la somme de toutes les valeurs $k$ dans K, et
$()^*$ signifie conjugaison complexe.

2. Codeur (100) selon la revendication 1, dans lequel l'ensemble K comporte au moins un nombre qui est différent de zéro.

3. Codeur (100) selon la revendication 1 ou 2, dans lequel

$$S_{XX,m} = \left| \sum_{k=0}^{N-1-m} X[k]X^*[k+m] \right|^{\alpha},$$

$$S_{YY,m} = \left| \sum_{k=0}^{N-1-m} Y[k]Y^*[k+m] \right|^{\alpha},$$

$$S_{XY,m} = \left| \sum_{k=0}^{N-1-m} X[k]Y^*[k+m] \right|^{\alpha},$$

pour $m \in \{0, \ldots, N - 2\}$
et dans lequel

$$S_{XX,m} = \left| \sum_{k=-m}^{N-1} X[k]X^*[k+m] \right|^{\alpha},$$

$$S_{YY,m} = \left| \sum_{k=-m}^{N-1} Y[k]Y^*[k+m] \right|^{\alpha},$$

$$S_{XY,m} = \left| \sum_{k=-m}^{N-1} X[k]Y^*[k+m] \right|^{\alpha},$$

pour $m \in \{-N + 2, \ldots, -1\}$.

4. Codeur (100) selon la revendication 1 ou 2, dans lequel

$$S_{XX,m} = \left| \sum_{k=0}^{N-1} X[k]X^*[k+m] \right|^{\alpha},$$

$$S_{YY,m} = \left| \sum_{k=0}^{N-1} Y[k]Y^*[k+m] \right|^{\alpha},$$

$$S_{XY,m} = \left| \sum_{k=0}^{N-1} X[k]Y^*[k+m] \right|^{\alpha},$$

pour tout $m$ E M, avec les définitions cycliques suivantes :

```
X[k + p * N] = X[k],
```

$$Y[k + p * N] = Y[k],$$

$$P \in \{-1,0,1\}.$$

**5.** Codeur (100) selon l'une quelconque des revendications 1 à 4, dans lequel l'ensemble *M* est un sur-ensemble d'au moins l'un des ensembles suivants :

$$\{0,1\}, \ \{-1,0\}, \ \{-1,0,1\},$$

$$\{0,1,2\}, \ \{-2, \ -1,0\}, \ \{-2, \ -1,0,1,2\},$$

$$\{0,1,2,3\}, \ \{-3, \ -2, \ -1,0\}, \ \{-3, \ -2, \ -1,0,1,2,3\},$$

où M=3.

**6.** Codeur (100) selon l'une quelconque des revendications 1 à 5, dans lequel $\alpha$ = 1.

**7.** Codeur (100) selon l'une quelconque des revendications 1 à 6, dans lequel $Z[k]$ comprend uniquement le premier symbole $X[k]$ et aucun autre symbole, et la métrique est définie comme

$$S = \sum_{m} w_{XX,m} \cdot S_{XX,m} \ .$$

**8.** Codeur (100) selon l'une quelconque des revendications 1 à 7, dans lequel la métrique $S$ est une mesure de distorsion attendue, la distorsion attendue étant la distorsion d'un signal porteur optique hypothétique qui est modulé avec la séquence de symboles Z et transmis via une fibre optique.

**9.** Codeur (100) selon l'une quelconque des revendications 1 à 8, dans lequel chacun de $X[k]$ et $Y[k]$ est à valeur complexe.

**10.** Codeur (100) selon la revendication 9, dans lequel chacun de $X[k]$ et $Y[k]$ est un symbole de modulation d'amplitude et de phase, APSK.

**11.** Codeur (100) selon la revendication 9, dans lequel chacun de $X[k]$ et $Y[k]$ est un symbole de modulation d'amplitude en quadrature, QAM.

**12.** Codeur (100) selon l'une quelconque des revendications 1 à 8, dans lequel chacun de $X[k]$ et $Y[k]$ est à valeur réelle.

**13.** Coder (100) selon la revendication 12, dans lequel chacun de $X[k]$ et $Y[k]$ est un symbole de modulation d'amplitude de pulsation, PAM.

**14.** Appareil de transmission par fibre optique (700), comprenant :

le codeur (100) selon l'une quelconque des revendications 1 à 13 ; et
un émetteur optique (702),
l'émetteur optique (702) ayant une entrée (704) connectée à la sortie (108) du codeur (100) et une sortie (706) connectée ou connectable à une fibre optique.

**15.** Appareil de transmission par fibre optique (700) selon la revendication 14, dans lequel l'émetteur optique (702) est configuré pour :

moduler un signal porteur optique sur la base de la séquence de symboles de modulation (112, 310, 400, 700), et
délivrer le signal porteur optique modulé à la sortie (706) de l'émetteur optique (702).

**FIG. 1**

**FIG. 2**

**FIG. 3**

FIG. 4

**FIG. 5**

**FIG. 6**

ONE OR MORE NON-ENCODED BITS

INDICATION OF A CODE WORD

ONE OR MORE ENCODED BITS

**FIG. 7**

**FIG. 8**

**FIG. 9**

**FIG. 10**

FIG. 11

RECEIVING AN INFORMATION BIT SEQUENCE
1202

TRANSLATING THE INFORMATION BIT SEQUENCE INTO A MODULATION SYMBOL SEQUENCE SUCH THAT THE MODULATION SYMBOL SEQUENCE HAS, AMONG ALL SYMBOL SEQUENCES IN A CANDIDATE SET OF SYMBOL SEQUENCES, A SMALLEST VALUE OF A METRIC
1204

OUTPUTTING THE MODULATION SYMBOL SEQUENCE
1206

**FIG. 12**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10587358 B1
- JP H11215091 A